# EUROPEAN PATENT SPECIFICATION

(11) **EP 1 332 637 B1**
(45) Date of publication and mention of the grant of the patent: **11.04.2007**
(21) Application number: 00971411.4
(22) Date of filing: 02.11.2000
(51) Int. Cl.: H04Q 7/38

(54) **CONTROL OF THE LOCATION INFORMATION**
STEUERUNG VON STANDORTINFORMATIONEN
COMMANDE DES INFORMATIONS DE LOCALISATION

(43) Date of publication of application: 06.08.2003
(73) Proprietor: Nokia Corporation, 02150 Espoo (FI)
(72) Inventor: Rajaniemi, Jaakko, Nokia Networks Oy, 02150 Espoo (FI)
(74) Representative: TBK-Patent
(86) International application number: PCT/EP2000/010818
(87) International publication number: WO 2002/037884

(56) References cited:
- EP-A- 0 898 438
- WO-A-00/28771
- WO-A-00/54475
- WO-A-98/32303
- WO-A-99/41928
- WO-A-99/66740

## Description

### FIELD OF THE INVENTION

The present invention relates to a network system and method for controlling the movement of a mobile station between different radio areas.

### BACKGROUND OF THE INVENTION

Document WO 99/66740 A2, describing the features of the preambles of the independent claims, discloses a location update method and intercore network entity handover methods. In detail, a location update during a handover of a mobile station MS between a first RNC to a second RNC is described, so that the control of the MS is changed from the first RNC to the second RNC.

Document WO 00/54475 describes a so-called multicast handover for mobile Internet Protocol.

The invention relates to the third generation system. In particular, the invention relates to an UMTS network system, and, furthermore, to the GSM system and mainly to a system which consists of GPRS core network which is connected via Iu-PS to the GERAN (GSM Edge Radio Access Network), UTRAN (UMTS Terrestrial Radio Access Network) or IP-RAN. A simple UMTS network comprises a Core Network (CN) functionality, a Radio network Controller (RNC) functionality and at least one Base Station (BS).

The CN functionality can be implemented, for example, in a Serving GPRS (General Packet Radio Server) Support Node (SGSN). In general, a GPRS Support Node (GSN) contains functionality required to support GPRS. In one PLMN (Public Land Mobile Network), there may be more than one GSN. The GSN can be a Gateway GPRS Support Node (GGSN) or a Serving GPRS Support Node (SGSN). The GGSN provides a gateway functionality, that is, provides an interface to other networks. On the other hand, the SGSN is the node that is serving a Mobile Station (MS).

The SGSN and GGSN functionalities may be combined in the same physical node, or they may reside in different physical nodes. SGSN and GGSN contain IP routing functionality, and they may be interconnected with IP routers. The SGSN may send location information to the Mobile Switching Center (MSC)/Visitor Location Register (VLR).

The RNC serves to provide a connection between the SGSN and the Base Stations, to which mobile stations can be connected.

Usually, a network contains a plurality of RNCs. Thus, the RNC which controls and contains information, such as security parameters, bearers negotiated, etc., for a certain mobile station is a so-called Serving RNC (SRNC).

Each RNC may control a plurality of base stations. A Routing Area (RA) contains a plurality of base stations. Routing Area is used e.g. at SGSN initiated paging related to SGSN services. The mobile station updates its location to the SGSN in the routing area level.

A mobile station may roam between different cells each of which being controlled by a base station. In case the base stations concerned are controlled by the same RNC, there occur no problems. However, if the mobile station roams to a cell controlled by a base station which is connected to another RNC, a SRNC relocation is necessary. In particular in case the RNCs concerned are controlled by different SGSN, there occur problems during the relocation. Namely, there might be irritation concerning which entity actually controls the mobile station.

Also due to different network configurations it may sometimes be difficult to the mobile station to know by which means it needs to update its location to the entities.

### SUMMARY OF THE INVENTION

Therefore, the object underlying the invention resides in solving the above-described problems.

According to the invention, this object is solved by a network system as set out in claim 1, or alternatively by a method as set out in claim 15, a network entity as set out in claim 29 or by a network control device as set out in claim 32.

Thus, according to the invention, the above problem can be solved by controlling to avoid the sending of certain information which may cause irritation. Namely, by such a control the sending of certain information can be completely avoided. Hence, a core network (CN) control unit such as a SGSN (Serving GPRS Support Node) cannot be confused by receiving information which are not meant for this CN control unit.

That is, by the network system and the method according to the invention, the movement of the mobile network element between two different network entities and also routing areas can be controlled such that no confusion due to receiving the location update information from the mobile network element can occur.

In addition, the radio resources are optimized since unnecessary information messages are avoided. That is, transmitting of the information allocated to the second network control element is suppressed. This means, for example, the information triggering a location update and the actual location update (and/or Routing area update) from the mobile station is suppressed. Hence, the traffic load on the network and on the air interface is reduced.

The type of information sent by the second network control device can be controlled. Hence, a specific type of information the sending of which is to be controlled can be chosen. That is, not all information is controlled, but only a certain type which can cause irritation.

The control of sending of the information may be such that it is avoided that the information is sent. That is, the information is not sent in case it can cause irritation.

The location information may be the routing area identity and/or the location area identity.

The information which is sent by the second network control device may be location information. The location update triggered by the sending of the location information to the mobile network element are in particular the reason why a confusion may occur in the CN entity.

The information may be an IP network prefix, or may be a Router Advertisement.

The first and second network control devices may be Radio Network Controllers (RNC).

The network system may further comprise a second main network control unit, which is allocated to the second network control device.

The first network control device may be connected to at least one network element via which it can be connected to the mobile station. Also, the second network control device may be connected to at least one network element via which it can be connected to the mobile station.

A location update may be performed by the network. That is, handling of the location update is not performed by the mobile station but by the network. That is, the network controls sending of the location information by the second network control device to the mobile station such that the mobile station does not start the location update.

The entity controlling the sending of the information to the mobile station may be a core network entity (e.g., an SGSN or an Access Network Router (ANR)) or the first network control device.

Furthermore, a core network control of the connection may be maintained at a first core network control unit allocated to the first network control device after the control of the connection has been moved from the first network control device to the second network control device.

### BRIEF DESCRIPTION OF THE DRAWINGS

The present invention will be more readily understood with reference to the accompanying drawing in which:
Fig. 1 illustrates a network system comprising two radio areas, each controlled by an own Radio Network Controller (RNC),
Fig. 2 illustrates the network system shown in Fig. 1, wherein a first SGSN is anchored,
Fig. 3 illustrates the network system shown in Fig. 1, wherein a location update is handled by an SGSN without that the MS sends a location update, and
Fig. 4 illustrates an example in which no location update but a Mobile IP version 6 binding update is performed.

### DETAILED DESCRIPTION OF PREFERRED EMBODIMENTS

In the following, a preferred embodiment of the invention is described in more detail with reference to the accompanying drawing.

In a dedicated radio connection the serving RNC (Radio Network Controller) (SRNC) controls the location information sent to the MS (Mobile Station) which in turn triggers location and/or Routing Area updating in the MS if the area has changed. The SRNC must always send location information belonging to its control area, i.e. cells which are controlled and connected to it.

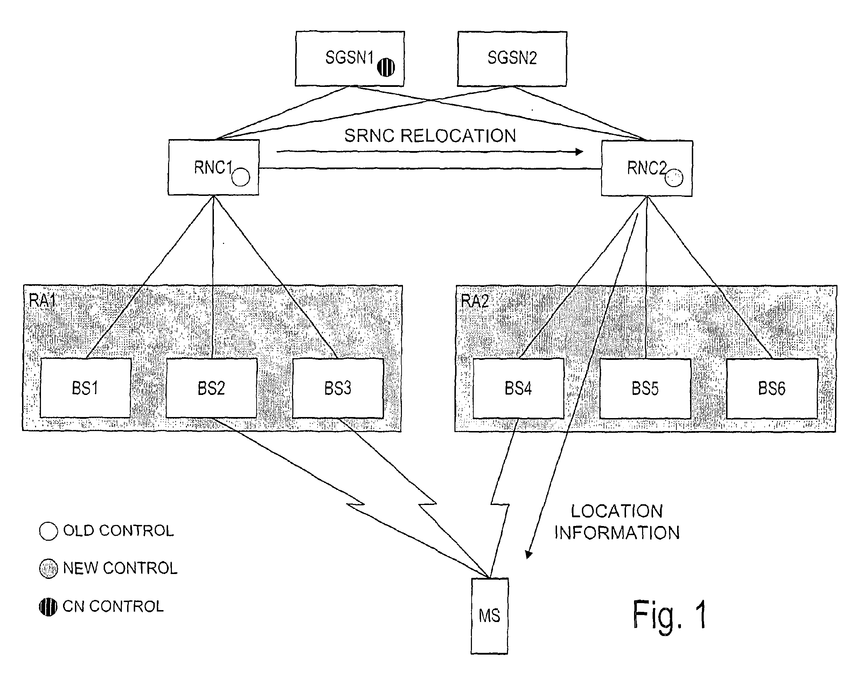

The problem in above cases is described in Fig. 1. Fig. 1 shows two Routing areas RA1 and RA2. In this example, RA1 comprises three base stations BS1 to BS3, and RA2 comprises three base stations BS4 to BS6. The base stations BS1 to BS3 of RA1 are controlled by a Radio Network Controller RNC1. The base stations BS4 to BS6 of RA2 are controlled by a Radio Network Controller RNC2.

Furthermore, RNC1 may be controlled by a Serving GPRS (General Packet Radio Service) Support Node SGSN1, whereas RNC2 may be controlled by a Serving GPRS Support Node SGSN2. In case of the so-called turbo charger concept (multipoint Iu) RNC1 and RNC2 may be controlled by both SGSN1 and SGSN2.

In the example of Fig. 1, a mobile station MS moves from the RNC1 area RA1 to the RNC2 area RA2. In the CN (Core Network), the SGSN 1 has controlled the connection when the MS was under control of RNC1 and was registered to RA1.

As illustrated in Fig. 1 by the circles, RNC1 has controlled before, i.e., has performed the old control before the SRNC relocation, whereas RNC2 performs the new control after the SRNC relocation. The SGSN1 performs the CN control in both cases.

When the MS moves to the area of the RNC2, the network performs SRNC relocation. This is indicated by the arrow from the RNC1 to the RNC2. It may occur that in this case also SGSN1 is changed to SGSN2. Therefore, the MS has to perform a Routing Area Update (RAU) to the SGSN2 in order to change the control of the SGSN and possibly update the MSC/VLR by performing the combined RAU. This has been triggered by the RNC2 when it has sent location information to the MS which indicates that the MS is under RA2.

However, in this example the CN control point is not changed and therefore SGSN1 is still controlling, even after the SRNC relocation is performed. This is illustrated in Fig. 1 by the connection between the SGSN1 and the RNC2.

It may be in some network configurations that the SGSN1 does not control the RA2. However, it is possible to perform handovers for the MS to RNC2 and RA2 and still maintain the control in the SGSN1. In this case the RNC2 must not send any location information indicating that the MS is under RA2, because the MS is controlled by SGSN1.

It may be in some network configurations that the SGSN1 controls the RA2. In this case the RNC2 should not send any location information indicating that the MS is under RA2, because the MS is controlled by SGSN1. This can be used to optimise the air interface capacity.

Furthermore, it is noted that the RNC2 may send the location information to the MS via RNC1 also.

Thus, according to the present embodiment, the CN controls the sending of the location information from the RNC, and the SGSN1 indicates in the SRNC relocation request message that no location information is to be sent from the RNC2 to the mobile station MS.

The CN controls the sending of the location information from the RNC. In the case described in Fig. 1 the SGSN1 indicates in the SRNC relocation request message (sent to RNC2) that no location information is sent to MS.

It is noted that the CN entity (i.e., the SGSN1) may indicate to the target network control device (which may be an RNC) that "no location information should be send to the MS, because it will result in a location update which is not needed". This is because the RNC relocation procedures at the moment always involve the CN entity(ies).

Nevertheless, this indication can also be sent by the RNC1 or by the SGSN2. It is noted, that the SGSN2 only exists if a SGSN change (from SGSN1 to SGSN2) is executed together with the RNC relocation.

Thus, according to the invention, an error case can be avoided when the MS updates location.

A further example where the error specifically occurs is the case where RNC1 is controlled by a Serving GPRS (General Packet Radio Service) Support Node SGSN1, whereas RNC2 is controlled by a Serving GPRS Support Node SGSN2. In this case the SGSN change is performed, and, only after this, the location information is sent to the mobile station (MS).

However, e.g. if the SGSN is not changed in case where the SGSN anchored the error case occurs if the MS sends a location update to the CN network (in this case the location update goes to the anchor SGSN1 which does not control the new location area(RA2).)

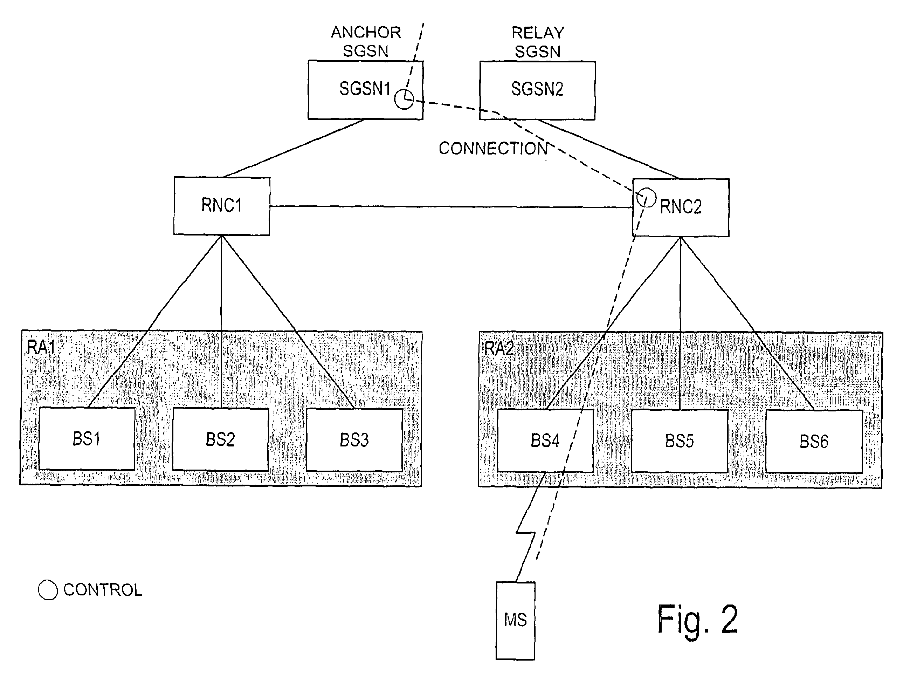

This situation is illustrated in Fig. 2 in which same reference signs denote same elements as in Fig. 1. In Fig. 2, the SGSN1 is anchored and the SGSN2 serves as a relay SGSN. That is, the SGSN1 controls the connection to the MS although it is in the area normally controlled by the SGSN2. In this case, the SGSN2 serves basically only to forward corresponding messaging and signaling between the MS and the anchor SGSN1.

According to the invention this problem is solved, as described above, by instructing the RNC2 that it should not send the location information to the MS which indicate RA2. Thus, the CN domain (i.e., the anchor SGSN1) is not confused by the MS which is actually located in RA2 although the SGSN1 normally controls the RA1.

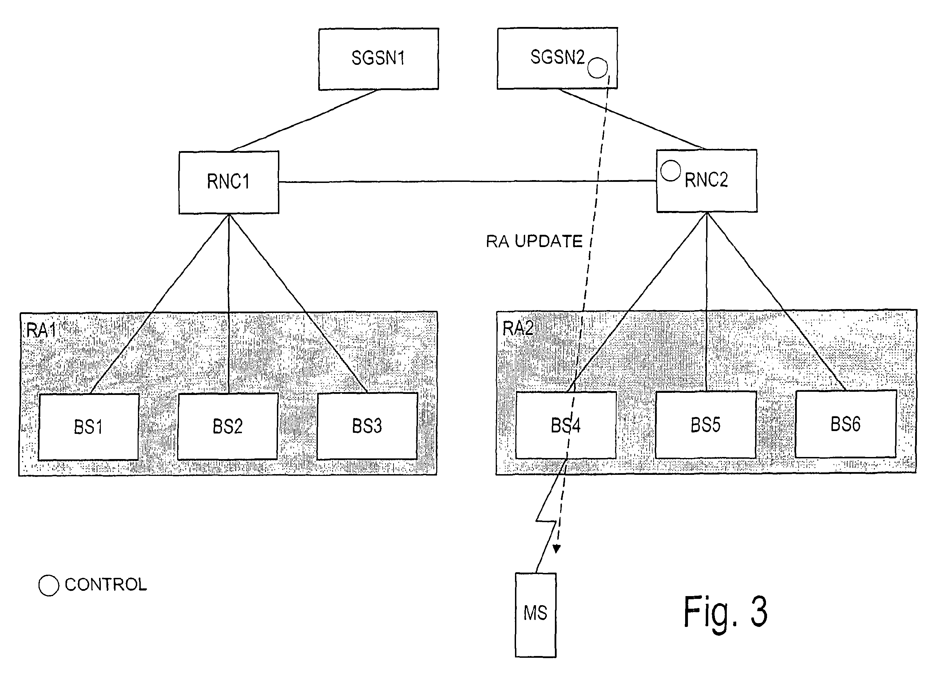

One additional example is described in the following with reference to Fig. 3, in which same reference signs denote same elements as in Fig. 1.

In this example, it is possible to update the location information in the CN without the MS sending any location update. In this case the network relocates the RNC and the SGSN (i.e., the connection(s) controlled by RNC2 and SGSN2) and SGSN2 updates the location database from the location information it receives from the RNC in the SRNC relocation procedure. After this the SGSN2 only indicates to the MS that its current location is the RA2. The MS updates the SIM (Subscriber Identity Module) based on this message. Also in this case, e.g., the SGSN2 controls the sending of the location information by the RNC2 to the MS in order that the MS does not start the location updating, because the location update is handled by the network.

Hence, in particular in the example of Fig. 3, the radio resources are optimized since no unnecessary location information updates are transmitted, thus reducing the load on the network.

Additionally it is possible that there may be some other types of CN entities in the CN which may need some other types of updates instead of the normal RA updating (location update) as for the GPRS core network. In this case it should be possible to control when the information is sent to the mobile station e.g. by the new RNC in case of the SRNC relocation and the type of the information sent to the mobile station.

One example for such a core network (CN) is a core network which is based on the IP based mobility management, namely Mobile IP or IP version 6 mobility. The CN consists of Access Network Routers (ANR) which contain e.g. IPv6 mobility agent.

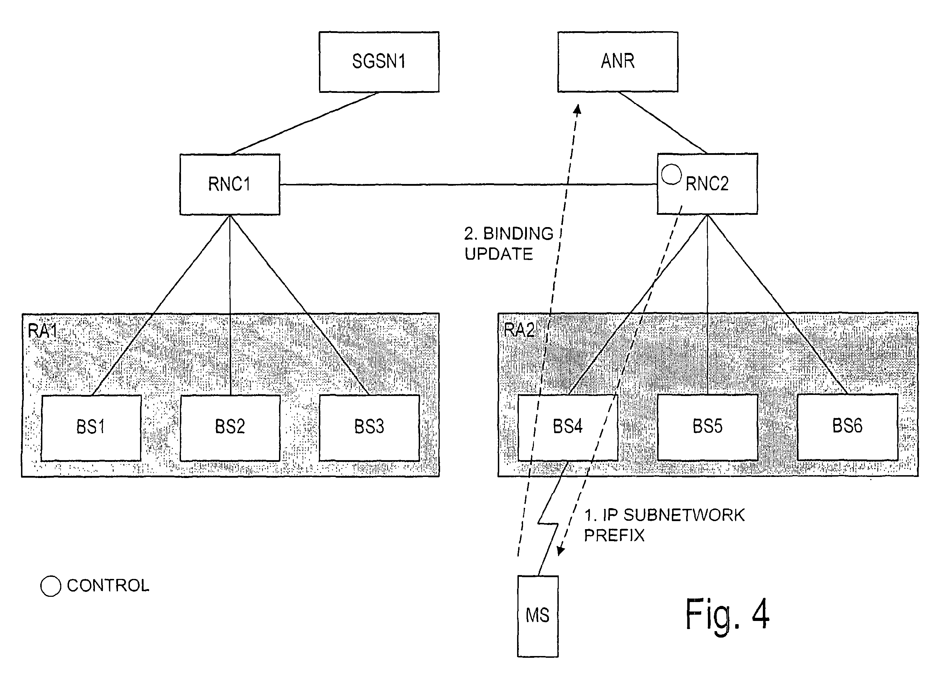

This is illustrated in Fig. 4, wherein same reference characters as used in Fig. 1 represent same or similar elements.

In the case illustrated in Fig. 4, it is controlled when e.g. the RNC sends the information. Furthermore, the RNC sends a Router Advertisement message with a IP subnetwork prefix indicating that the mobile station has changed the IP subnetwork and performs a Binding Update to the core network.

Thus, also in this example the core network entity (i.e., the SGSN or ANR) can get confused by the messages during or immediately after an SRNC relocation is performed, similar to the case of a location update described with respect to Figs. 1 to 3. Hence, according to the present invention, sending of these messages is suppressed.

It is noted that the information can be sent by another entity of the network which is responsible therefor.

The above description and accompanying drawing only illustrate the present invention by way of example. Thus, the embodiment of the invention may vary within the scope of the attached claims.

For example, as an alternative, the RNC can be configured to know all CN domains and the cells which are controlled by them. That is, e.g., the RNC1 would know in this case that the SGSN1 controls cells of the base stations BS1 to BS3 and that the SGSN2 controls cells of the base stations BS4 to BS6. In this way, the RNC would know when it can send the location information or not.

The invention is also applicable to concepts such as turbo charger and the separation of the control and transport. This concepts change the one to one correspondence of the RNC and CN domain (i.e., either MSC (Mobile Switching Center) or SGSN). That is, any CN domain may be connected to any RNC in the same PLMN (Public Land Mobile Network). If the CN domain can be anchored or non-anchored, this operation has a different problem but the same solution may be used for this case also.

Currently, the MS always starts the location updating. However, it may be possible that the location updating is executed in the network without the MS starting the procedure. If the network is capable of starting the location updating, then according to the present invention, the terminals can be prevented from starting the location updating if the MS has crossed a location area border.

## Claims

1. A network system comprising
a first network control device (RNC1),
a second network control device (RNC2),
a mobile network element (MS),and
a network entity,
**characterized in that**
the network entity is adapted to control the second network control device (RNC2) to avoid sending a predetermined information to the mobile network element (MS) in case the control of the connection of the mobile network element (MS) is moved from the first network control device (RNC1) to the second network control device (RNC2).

2. The network system according to claim 1,
**characterized in that** the type of the information sent by the second network control device may be controlled.

3. The network system according to claim 1,
**characterized in that** the information is location information.

4. The network system according to claim 3,
**characterized in that** the location information is a routing area identity and/or a location area identity.

5. The network system according to claim 1,
**characterized in that** the information is IP subnetwork prefix.

6. The network system according to claim 1,
**characterized in that** the information is a Router Advertisement.

7. The network system according to claim 1,
**characterized in that** the first and second network control devices (RNC1, RNC2) are Radio Network Controllers.

8. The network system according to claim 1,
**characterized by** further comprising a second core network control unit (SGSN2) which is allocated to the second network control device (RNC2).

9. The network system according to claim 1,
**characterized in that** the first network control device (RNC1) is connected to at least one fixed network element (BS1) via which it can be connected to the mobile station (MS).

10. The network system according to claim 1,
**characterized in that** the second network control device (RNC2) is connected to at least one fixed network element (BS1) via which it can be connected to the mobile station (MS).

11. The network system according to claim 3,
**characterized in that** the network is adapted to perform a location update.

12. The network system according to claim 1,
**characterized in that** the network entity controlling the second network to avoid sending of the predetermined information to the mobile station is a core network entity (SGSN1, SGSN2, ANR).

13. The network system according to claim 1,
**characterized in that** the network entity controlling the second network to avoid sending of the information to the mobile station is the first network control device (RNC1).

14. The network system according to claim 1,
**characterized in that** a first core network control unit (SGSN1) allocated to the first network control device (RNC1) is adapted to maintain a core network control of the connection after the control of the connection has been moved from the first network control device (RNC1) to the second network control device (RNC2).

15. A method for controlling a network which comprises a first network control device (RNC1), a second network device (RNC2), and a mobile network element (MS),
the method being **characterized by** the step of
avoiding that the second network control device (RNC2) sends a predetermined information to the mobile network element (MS) in case the control of the connection of the mobile network element (MS) is moved from the first network control device (RNC1) to the second network control device (RNC2).

16. The method according to claim 15, **characterized by** further comprising the step of controlling the type of the information sent by the second network control device.

17. The method according to claim 15, **characterized in that** the predetermined information is location information.

18. The method according to claim 15, **characterized in that** the location information is a routing area identity and/or a location area identity.

19. The method according to claim 15, **characterized in that** the information is IP subnetwork prefix.

20. The method according to claim 15, **characterized in that** the information is a Router Advertisement.

21. The method according to claim 15, **characterized in that** the first and second network control devices (RNC1, RNC2) are Radio Network Controllers.

22. The method according to claim 15, **characterized by** further comprising a second core network control unit (SGSN2) which is allocated to the second network control device (RNC2).

23. The method according to claim 15, **characterized in that** the first network control device (RNC1) is connected to at least one fixed network element (BS1) via which it can be connected to the mobile station (MS).

24. The method according to claim 15, **characterized in that** the second network control device (RNC2) is connected to at least one fixed network element (BS1) via which it can be connected to the mobile station (MS).

25. The method according to claim 17, **characterized in that** a location update is performed by the network.

26. The method according to claim 15, **characterized in that** a network entity controlling the second network control device to avoid sending of the information to the mobile station is a core network entity (SGSN1, SGSN2, ANR).

27. The method according to claim 15, **characterized in that** a network entity controlling the second network control device to avoid sending of the information to the mobile station is the first network control device (RNC1).

28. The method according to claim 15, **characterized by** further comprising the step of maintaining a core network control of the connection at a first core network control unit (SGSN1) allocated to the first network control device (RNC1) after the control of the connection has been moved from the first network control device (RNC1) to the second network control device (RNC2).

29. A network entity for controlling a first network control device (RNC1), a second network control device (RNC2) and a mobile network element (MS)
**characterized in that**
the network entity is adapted to control the second network control device (RNC2) to avoid sending a predetermined information to the mobile network element (MS) in case the control of the connection of the mobile network element (MS) is moved from the first network control device (RNC1) to the second network control device (RNC2).

30. The network entity according to claim 29,
**characterized in that** the network entity is a core network entity (SGSN1, SGSN2, ANR).

31. The network entity according to claim 31,
**characterized in that** the network entity is the first network control device(RNC1).

32. A network control device, **characterized in that** the network control device is adapted to avoid sending a predetermined information to a mobile network element (MS) by being controlled from a network entity in case the control of the connection of the mobile network element (MS) is moved from another network control device (RNC1) to the network control device (RNC2).

33. The network control device according to claim 32,
**characterized in that** the network control device is a Radio Network Controller.

34. The network control device according to claim 32,
**characterized in that** the network control device (RNC2) is connected to at least one fixed network element (BS1) via which it can be connected to the mobile station (MS).

## Patentansprüche

1. Netzwerksystem mit:
einer ersten Netzwerksteuervorrichtung (RNC1),
einer zweiten Netzwerksteuervorrichtung (RNC2),
einem mobilen Netzwerkelement (MS), und
einer Netzwerkinstanz,
**dadurch gekennzeichnet, dass**
die Netzwerkinstanz angepasst ist zum Steuern der zweiten Netzwerksteuervorrichtung (RNC2), um ein Senden einer vorbestimmten Information an das mobile Netzwerkelement (MS) zu vermeiden, falls die Steuerung der Verbindung des mobilen Netzwerkelements (MS) von der ersten Netzwerksteuervorrichtung (RNC1) an die zweite Netzwerksteuervorrichtung (RNC2) verschoben wird.

2. Netzwerksystem gemäß Anspruch 1, **dadurch gekennzeichnet, dass** der Typ der von der zweiten Netzwerksteuervorrichtung gesendeten Information gesteuert werden kann.

3. Netzwerksystem gemäß Anspruch 1, **dadurch gekennzeichnet, dass** die Information eine Standortinformation ist.

4. Netzwerksystem gemäß Anspruch 3, **dadurch gekennzeichnet, dass** die Standortinformation eine Routingbereichskennung und/oder eine Standortbereichskennung ist.

5. Netzwerksystem gemäß Anspruch 1, **dadurch gekennzeichnet, dass** die Information ein IP-Teilnetzwerkpräfix ist.

6. Netzwerksystem gemäß Anspruch 1, **dadurch gekennzeichnet, dass** die Information eine Routerankündigung ist.

7. Netzwerksystem gemäß Anspruch 1, **dadurch gekennzeichnet, dass** die erste und die zweite Netzwerksteuervorrichtung (RNC1, RNC2) Funknetzwerksteuerungen sind.

8. Netzwerksystem gemäß Anspruch 1, **dadurch gekennzeichnet, dass** es zusätzlich eine zweite Kernnetzwerksteuereinheit (SGSN2) aufweist, die der zweiten Netzwerksteuervorrichtung (RNC2) zugeordnet ist.

9. Netzwerksystem gemäß Anspruch 1, **dadurch gekennzeichnet, dass** die erste Netzwerksteuervorrichtung (RNC1) mit zumindest einem festen Netzwerkelement (BS1) verbunden ist, über das sie mit der Mobilstation (MS) verbunden werden kann.

10. Netzwerksystem gemäß Anspruch 1, **dadurch gekennzeichnet, dass** die zweite Netzwerksteuervorrichtung (RNC2) mit zumindest einem festen Netzwerkelement (BS1) verbunden ist, über das sie mit der Mobilstation (MS) verbunden werden kann.

11. Netzwerksystem gemäß Anspruch 3, **dadurch gekennzeichnet, dass** das Netzwerk angepasst ist zum Durchführen einer Standortaktualisierung.

12. Netzwerksystem gemäß Anspruch 1, **dadurch gekennzeichnet, dass** die Netzwerkinstanz, die das zweite Netzwerk steuert, um ein Senden der vorbestimmten Information an die Mobilstation zu vermeiden, eine Kernnetzwerkinstanz (SGSN1, SGSN2, ANR) ist.

13. Netzwerksystem gemäß Anspruch 1, **dadurch gekennzeichnet, dass** die Netzwerkinstanz, die das zweite Netzwerk steuert, um ein Senden der Information an die Mobilstation zu vermeiden, die erste Netzwerksteuervorrichtung (RNC1) ist.

14. Netzwerksystem gemäß Anspruch 1, **dadurch gekennzeichnet, dass** eine erste Kernnetzwerksteuereinheit (SGSN1), die der ersten Netzwerksteuervorrichtung (RNC1) zugeordnet ist, angepasst ist zum Beibehalten einer Kernnetzwerksteuerung der Verbindung, nachdem die Steuerung der Verbindung von der ersten Netzwerksteuervorrichtung (RNC1) an die zweite Netzwerksteuervorrichtung (RNC2) verschoben wurde.

15. Verfahren zum Steuern eines Netzwerks, das eine erste Netzwerksteuervorrichtung (RNC1), eine zweite Netzwerksteuervorrichtung (RNC2) und ein mobiles Netzwerkelement (MS) aufweist,
**gekennzeichnet durch** den Schritt:
Vermeiden, dass die zweite Netzwerksteuervorrichtung (RNC2) eine vorbestimmte Information an das mobile Netzwerkelement (MS) sendet, falls die Steuerung der Verbindung des mobilen Netzwerkelements (MS) von der ersten Netzwerksteuervorrichtung (RNC1) an die zweite Netzwerksteuervorrichtung (RNC2) verschoben wird.

16. Verfahren gemäß Anspruch 15, **dadurch gekennzeichnet, dass** es zusätzlich den Schritt zum Steuern des Typs der von der zweiten Netzwerksteuervorrichtung gesendeten Information aufweist.

17. Verfahren gemäß Anspruch 15, **dadurch gekennzeichnet, dass** die vorbestimmte Information eine Standortinformation ist.

18. Verfahren gemäß Anspruch 15, **dadurch gekennzeichnet, dass** die Standortinformation eine Routingbereichskennung und/oder eine Standortbereichskennung ist.

19. Verfahren gemäß Anspruch 15, **dadurch gekennzeichnet, dass** die Information ein IP-Teilnetzwerkpräfix ist.

20. Verfahren gemäß Anspruch 15, **dadurch gekennzeichnet, dass** die Information eine Routerankündigung ist.

21. Verfahren gemäß Anspruch 15, **dadurch gekennzeichnet, dass** die erste und die zweite Netzwerksteuervorrichtung (RNC1, RNC2) Funknetzwerksteuerungen sind.

22. Verfahren gemäß Anspruch 15, **dadurch gekennzeichnet, dass** es zusätzlich eine zweite Kernnetzwerksteuereinheit (SGSN2) aufweist, die der zweiten Netzwerksteuervorrichtung (RNC2) zugeordnet ist.

23. Verfahren gemäß Anspruch 15, **dadurch gekennzeichnet, dass** die erste Netzwerksteuervorrichtung (RNC1) mit zumindest einem festen Netzwerkelement (BS1) verbunden ist, über das sie mit der Mobilstation (MS) verbunden werden kann.

24. Verfahren gemäß Anspruch 15, **dadurch gekennzeichnet, dass** die zweite Netzwerksteuervorrichtung (RNC2) mit zumindest einem festen Netzwerkelement (BS1) verbunden ist, über das sie mit der Mobilstation (MS) verbunden werden kann.

25. Verfahren gemäß Anspruch 17, **dadurch gekennzeichnet, dass** von dem Netzwerk eine Standortaktualisierung durchgeführt wird.

26. Verfahren gemäß Anspruch 15, **dadurch gekennzeichnet, dass** eine Netzwerkinstanz, die die zweite Netzwerksteuervorrichtung steuert, um ein Senden der Information an die Mobilstation zu vermeiden, eine Kernnetzwerkinstanz (SGSN1, SGSN2, ANR) ist.

27. Verfahren gemäß Anspruch 15, **dadurch gekennzeichnet, dass** eine Netzwerkinstanz, die die zweite Netzwerksteuervorrichtung steuert, um ein Senden der Information an die Mobilstation zu vermeiden, die erste Netzwerksteuervorrichtung (RNC1) ist.

28. Verfahren gemäß Anspruch 15, **dadurch gekennzeichnet, dass** sie zusätzlich den Schritt zum Beibehalten einer Kernnetzwerksteuerung von der Verbindung an einer ersten Kernnetzwerksteuereinheit (SGSN1) aufweist, die der erste Netzwerksteuervorrichtung (RNC1) zugeordnet ist, nachdem die Steuerung der Verbindung von der ersten Netzwerksteuervorrichtung (RNC1) an die zweite Netzwerksteuervorrichtung (RNC2) verschoben wurde.

29. Netzwerkinstanz zur Steuerung einer ersten Netzwerksteuervorrichtung (RNC1), einer zweiten Netzwerksteuervorrichtung (RNC2) und eines mobilen Netzwerkelements (MS),
**dadurch gekennzeichnet, dass**
die Netzwerkinstanz angepasst ist zum Steuern der zweiten Netzwerksteuervorrichtung (RNC2), um ein Senden einer vorbestimmten Information an das mobile Netzwerkelement (MS) zu vermeiden, wenn die Steuerung der Verbindung des mobilen Netzwerkelements (MS) von der ersten Netzwerksteuervorrichtung (RNC1) an die zweite Netzwerksteuervorrichtung (RNC2) verschoben wird.

30. Netzwerkinstanz gemäß Anspruch 29, **dadurch gekennzeichnet, dass** die Netzwerkinstanz eine Kernnetzwerkinstanz (SGSN1, SGSN2, ANR) ist.

31. Netzwerkinstanz gemäß Anspruch 31, **dadurch gekennzeichnet, dass** die Netzwerkinstanz die erste Netzwerksteuervorrichtung (RNC1) ist.

32. Netzwerksteuervorrichtung, **dadurch gekennzeichnet, dass** die Netzwerksteuervorrichtung angepasst ist zum Vermeiden eines Sendens einer vorbestimmten Information an ein mobiles Netzwerkelement (MS), indem sie von einer Netzwerkinstanz gesteuert wird, falls die Steuerung der Verbindung des mobilen Netzwerkelements (MS) von einer anderen Netzwerksteuervorrichtung (RNC1) an die Netzwerksteuervorrichtung (RNC2) verschoben wird.

33. Netzwerksteuervorrichtung gemäß Anspruch 32, **dadurch gekennzeichnet, dass** die Netzwerksteuervorrichtung eine Funknetzwerksteuerung ist.

34. Netzwerksteuervorrichtung gemäß Anspruch 32, **dadurch gekennzeichnet, dass** die Netzwerksteuervorrichtung (RNC2) mit zumindest einem festen Netzwerkelement (BS1) verbunden ist, über das sie mit der Mobilstation (MS) verbunden werden kann.

## Revendications

1. Système de réseau comprenant
un premier dispositif de commande de réseau (RNC1),
un second dispositif de commande de réseau (RNC2),
un élément de réseau mobile (MS) ; et
une entité de réseau,
**caractérisé en ce que**
l'entité de réseau est adaptée pour commander le second dispositif de commande de réseau (RNC2) pour éviter d'envoyer des informations prédéterminées à l'élément de réseau mobile (MS) dans le cas où la commande de la connexion de l'élément de réseau mobile (MS) est déplacée du premier dispositif de commande de réseau (RNC1) au second dispositif de commande de réseau (RNC2).

2. Système de réseau selon la revendication 1, **caractérisé en ce que** le type des informations envoyées par le second dispositif de commande de réseau peut être commandé.

3. Système de réseau selon la revendication 1, **caractérisé en ce que** les informations sont des informations d'emplacement.

4. Système de réseau selon la revendication 3, **caractérisé en ce que** les informations d'emplacement sont une identité de zone de routage et/ou une identité de zone d'emplacement.

5. Système de réseau selon la revendication 1, **caractérisé en ce que** les informations sont un préfixe de sous-réseau IP.

6. Système de réseau selon la revendication 1, **caractérisé en ce que** les informations sont une annonce de routeur.

7. Système de réseau selon la revendication 1, **caractérisé en ce que** les premier et second dispositifs de commande de réseau (RNC1, RNC2) sont des unités de commande de réseau radio.

8. Système de réseau selon la revendication 1, **caractérisé en ce qu'**il comprend en outre une seconde unité de commande de réseau d'infrastructures (SGSN2) qui est allouée au second dispositif de commande de réseau (RNC2).

9. Système de réseau selon la revendication 1, **caractérisé en ce que** le premier dispositif de commande de réseau (RNC1) est connecté à au moins un élément de réseau fixe (BS1) via lequel il peut être connecté à la station mobile (MS).

10. Système de réseau selon la revendication 1, **caractérisé en ce que** le second dispositif de commande de réseau (RNC2) est connecté à au moins un élément de réseau fixe (BS1) via lequel il peut être connecté à la station mobile (MS).

11. Système de réseau selon la revendication 3, **caractérisé en ce que** le réseau est adapté pour effectuer une mise à jour d'emplacement.

12. Système de réseau selon la revendication 1, **caractérisé en ce que** l'entité de réseau commandant le second réseau pour éviter d'envoyer les informations prédéterminées à la station mobile est une entité de réseau d'infrastructures (SGSN1, SGSN2, ANR).

13. Système de réseau selon la revendication 1, **caractérisé en ce que** l'entité de réseau commandant le second réseau pour éviter d'envoyer les informations à la station mobile est le premier dispositif de commande de réseau (RNC1).

14. Système de réseau selon la revendication 1, **caractérisé en ce qu'**une première unité de commande de réseau d'infrastructures (SGSN1) allouée au premier dispositif de commande de réseau (RNC1) est adaptée pour maintenir une commande de réseau d'infrastructures de la connexion après que la commande de la connexion a été déplacée du premier dispositif de commande de réseau (RNC1) au second dispositif de commande de réseau (RNC2).

15. Procédé de commande d'un réseau qui comprend un premier dispositif de commande de réseau (RNC1), un second dispositif de commande de réseau (RNC2) et un élément de réseau mobile (MS) ;
le procédé étant **caractérisé par** l'étape consistant à
éviter que le second dispositif de commande de réseau (RNC2) n'envoie des informations prédéterminées à l'élément de réseau mobile (MS) dans le cas où la commande de la connexion de l'élément de réseau mobile (MS) est déplacée du premier dispositif de commande de réseau (RNC1) au second dispositif de commande de réseau (RNC2).

16. Procédé selon la revendication 15, **caractérisé en ce qu'**il comprend en outre l'étape consistant à commander le type des informations envoyées par le second dispositif de commande de réseau.

17. Procédé selon la revendication 15, **caractérisé en ce que** les informations prédéterminées sont des informations d'emplacement.

18. Procédé selon la revendication 15, **caractérisé en ce que** les informations d'emplacement sont une identité de zone de routage et/ou une identité de zone d'emplacement.

19. Procédé selon la revendication 15, **caractérisé en ce que** les informations sont un préfixe de sous-réseau IP.

20. Procédé selon la revendication 15, **caractérisé en ce que** les informations sont une annonce de routeur.

21. Procédé selon la revendication 15, **caractérisé en ce que** les premier et second dispositifs de commande de réseau (RNC1, RNC2) sont des unités de commande de réseau radio.

22. Procédé selon la revendication 15, **caractérisé en ce qu'**il comprend en outre une seconde unité de commande de réseau d'infrastructures (SGSN2) qui est allouée au second dispositif de commande de réseau (RNC2).

23. Procédé selon la revendication 15, **caractérisé en ce que** le premier dispositif de commande de réseau (RNC1) est connecté à au moins un élément de réseau fixe (BS1) via lequel il peut être connecté à la station mobile (MS).

24. Procédé selon la revendication 15, **caractérisé en ce que** le second dispositif de commande de réseau (RNC2) est connecté à au moins un élément de réseau fixe (BS1) via lequel il peut être connecté à la station mobile (MS).

25. Procédé selon la revendication 17, **caractérisé en ce qu'**une mise à jour d'emplacement est effectuée par le réseau.

26. Procédé selon la revendication 15, **caractérisé en ce que** l'entité de réseau commandant le second dispositif de commande de réseau pour éviter d'envoyer les informations à la station mobile est une entité de réseau d'infrastructure (SGSN1, SGSN2, ANR).

27. Procédé selon la revendication 15, **caractérisé en ce qu'**une entité de réseau commandant le second dispositif de commande de réseau pour éviter d'envoyer les informations à la station mobile est le premier dispositif de commande de réseau (RNC1).

28. Procédé selon la revendication 15, **caractérisé en ce qu'**il comprend en outre l'étape consistant à maintenir une commande de réseau d'infrastructures de la connexion au niveau d'une première unité de commande de réseau d'infrastructures (SGSN1) allouée au premier dispositif de commande de réseau (RNC1) après que la commande de la connexion a été déplacée du premier dispositif de commande de réseau (RNC1) au second dispositif de commande de réseau (RNC2).

29. Entité de réseau destinée à commander un premier dispositif de commande de réseau (RNC1), un second dispositif de commande de réseau (RNC2) et un élément de réseau mobile (MS)
**caractérisée en ce que**
l'entité de réseau est adaptée pour commander le second dispositif de commande de réseau (RNC2) pour éviter d'envoyer des informations prédéterminées à l'élément de réseau mobile (MS) dans le cas où la commande de la connexion de l'élément de réseau mobile (MS) est déplacée du premier dispositif de commande de réseau (RNC1) au second dispositif de commande de réseau (RNC2).

30. Entité de réseau selon la revendication 29, **caractérisée en ce que** l'entité de réseau est une entité de réseau d'infrastructures (SGSN1, SGSN2, ANR).

31. Entité de réseau selon la revendication 31, **caractérisée en ce que** l'entité de réseau est le premier dispositif de commande de réseau (RNC1).

32. Dispositif de commande de réseau, **caractérisé en ce que** le dispositif de commande de réseau est adapté pour éviter d'envoyer des informations prédéterminées à un élément de réseau mobile (MS) en étant commandé à partir d'une entité de réseau dans le cas où la commande de la connexion de l'élément de réseau mobile (MS) est déplacée d'un autre dispositif de commande de réseau (RNC1) au dispositif de commande de réseau (RNC2).

33. Dispositif de commande de réseau selon la revendication 32, **caractérisé en ce que** le dispositif de commande de réseau est une unité de commande de réseau radio.

34. Dispositif de commande de réseau selon la revendication 32, **caractérisé en ce que** le dispositif de commande de réseau (RNC2) est connecté à au moins un élément de réseau fixe (BS1) via lequel il peut être connecté à la station mobile (MS).
